# EUROPEAN PATENT SPECIFICATION

(11) **EP 1 097 872 B1**
(45) Date of publication and mention of the grant of the patent: **21.05.2003**
(21) Application number: 00830698.7
(22) Date of filing: 24.10.2000
(51) Int. Cl.: B65C 9/10

(54) **A unit for feeding labels to a user machine**
Vorrichtung zum Zuführen von Etiketten zu einer Etikettiermaschine
Dispositif d'approvisionnement d'une étiquetteuse en étiquettes

(30) Priority: 04.11.1999 IT BO990592
(43) Date of publication of application: 09.05.2001
(73) Proprietor: G.D. S.p.A., 40133 Bologna (IT)
(72) Inventor: Draghetti, Fiorenzo, 40059 Medicina (Bologna) (IT); Valentini, Antonio, 40068 San Lazzaro di Savena (Bologna) (IT)
(74) Representative: Lanzoni, Luciano

(56) References cited:
- WO-A-96/15034
- DD-A- 286 546
- DE-A- 19 730 307
- US-A- 3 929 326
- US-A- 5 395 208

## Description

The present invention relates to a unit for feeding labels to a user machine comprising the features expressed in the preamble of claim 1.

In particular, the present invention relates to a unit by which labels destined to serve as seals indicating the application of a manufacturing levy, or as revenue stamps, are supplied to a machine for packaging cigarettes or similar products; explicit reference is made to such a machine throughout the following specification, albeit with no limitation in scope implied.

In the case of cigarette packers, revenue stamp labels are accumulated generally so as to form a stack internally of a magazine that appears as a substantially vertical fixed column, or hopper. Generally speaking, the labels drop by gravity through a bottom outlet of the hopper, from where they are taken up singly and transferred to the operating stations of the packer.

The nature of the devices by which the labels are taken up is such that the pressure bearing on the bottom label of the accumulated stack must be kept within certain limits to ensure there will be no difficulty in removing the selfsame bottom label from the outlet of the hopper, a step accomplished generally by means of vacuum sectors. This imposes restrictions on the height of the hopper, which as a result has a relatively limited storage capacity and needs to be refilled at frequent intervals with previously formed stacks of labels.

The higher the operating speed of the packer, the more frequently the refilling operation has to be repeated, and accordingly, the step of refilling the hopper is performed automatically in high speed packers. In particular, US Patent 3,929,326, DE 19730307 as well as EP 1060993 teach a method of refilling the hopper automatically with previously formed stacks of labels supplied by an auxiliary magazine of relatively large capacity. US Patent 3,929,326 discloses an auxiliary magazine consisting in a drum rotatable about a vertical axis and furnished with a plurality of longitudinal compartments around the periphery, each designed to contain a respective previously formed stack of labels; the drum is supported by a plate positioned above the hopper and driven intermittently in such a way that each successive compartment is brought to rest in alignment with the hopper, occupying a station at which the labels are transferred from the compartment to the hopper.

According to the aforementioned US Patent 3,929,326 the drum is refilled manually while on the machine, by an operator who inserts previously formed stacks of labels in the compartments during the pauses in the rotation of the drum.

Given the relatively large capacity of the drum, the operator is able to perform the aforementioned task of refilling the compartments less frequently than would be necessary in the case of the hopper having to be refilled directly. Nonetheless, the task of refilling the single compartments within the operating compass of the machine during pauses in the rotation of the drum is rendered difficult, and risky, due both to the limited accessibility of the compartments and to the high operating speeds of modern packaging machines, since any pauses are of extremely short duration. Indeed the shorter the duration of the pauses, evidently, the less will be the time available to the operator to insert the previously formed stacks of labels correctly in the various compartments and the greater the difficulty experienced by the operator in timing the action performed internally of the compartments with the frequent steps indexed by the drum.

Moreover, the fewer in number the stacks of labels the operator is able to insert during each pause, the higher will be the frequency of the refilling operations needed in order to keep the feed unit from emptying and thus triggering an unwanted stop of the packaging machine as a whole.

Also the document DE 197 30 307 discloses an auxiliary magazine consisting in a drum rotatable about a vertical axis and furnished with a plurality of longitudinal compartments around the periphery, each designed to contain a respective previously formed stack of labels very similar to the auxiliary magazine disclosed by the document US 3,929,326 while the document EP 1 060 993 discloses an auxiliary magazine comprising a frame on which the compartments are distributed along a rectilinear path to sequentially feed each stack of labels to a main magazine. However the problems previously cited are not solved by such documents.

The object of the present invention is to provide a unit for feeding labels to a user machine, in which the drawbacks mentioned above are overcome.

The stated object is realized by a unit comprising the features expressed in the characterising portion of claim 1.

The invention will now be described in detail, by way of example, with the aid of the accompanying drawings, in which:
- fig 1 illustrates a first embodiment of the label feed unit according to the present invention, seen schematically in perspective and with certain parts omitted for clarity;
- fig 2 is-a more detailed illustration showing a first part of fig 1, viewed in perspective;
- fig 3 is an enlarged illustration showing a second part of fig 1, viewed in perspective;
- figs 4, 5 and 6 are respective plan views of the label feed unit illustrated in fig 1, shown with certain parts in section and certain parts omitted for clarity;
- fig 7 illustrates a variation in embodiment of the label feed unit in fig 1, viewed schematically in a side elevation and with certain parts omitted for clarity;

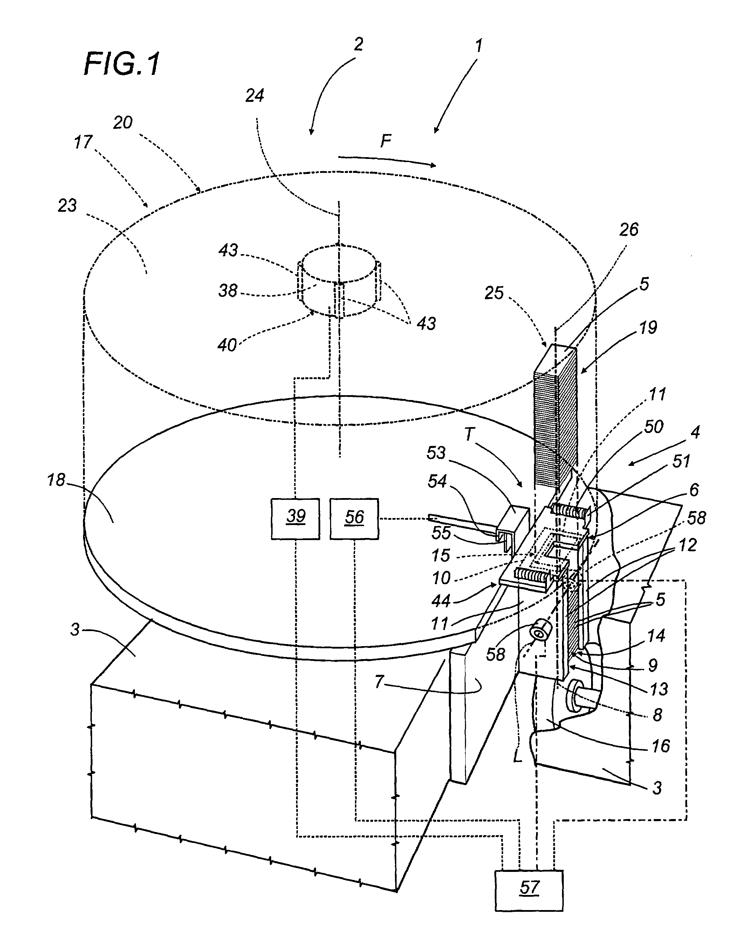

With reference to fig 1 of the drawings, 1 denotes a portion, in its entirety, of a packer machine 2 (not illustrated) for manufacturing packets of cigarettes.

The portion 1 of the machine comprises a bed 3 carrying a feed unit 4 for labels 5 of rectangular shape, each affixable in conventional manner (not illustrated) to a respective packet of cigarettes (not illustrated) and functioning as a seal or revenue stamp.

The unit 4 comprises a stationary main column feed magazine, or hopper 6, which is associated with the bed 3 by way of a vertically disposed flat mounting plate 7, aligned on a predominating vertical axis 8 and designed to hold a stack 9 of labels 5 aligned likewise on the selfsame axis 8.

The hopper 6 presents a flat back wall 10 disposed parallel to the axis 8 and secured parallel to the plate 7, two flat side walls 11 extending at right angles to the back wall 10 and parallel likewise to the axis 8, also two flat front walls 12 extending at right angles from the respective side walls 11 one toward the other, parallel to the back wall 10, and compassing a longitudinal opening 13 through which the inside of the hopper 6 is accessible. These same walls 10, 11 and 12 combine to create an outlet 14 at the bottom end and an inlet 15 at the top end, by way of which the labels 5 are admitted and released respectively.

The outlet 14 is positioned directly above a pickup head 16 equipped with conventional vacuum sectors (not illustrated), by which the labels 5 are taken up singly from the outlet 14 and transferred singly and in succession, in a conventional manner not illustrated, to the work stations (not illustrated) of the packer 2, whilst the inlet 15 is positioned directly below an auxiliary magazine 17 from which the hopper 6 is filled.

The auxiliary magazine 17, which is illustrated schematically in fig 1 with phantom lines, affords a relatively large storage capacity in comparison to the hopper 6 and is embodied, considered in its entirety, as an interchangeable cartridge of the feed unit 4.

The magazine 17 is supported on the bed 3 by way of a horizontally disposed flat plate 18 extending at right angles away from the vertical plate 7 on the side opposite to the hopper 6. In particular, the magazine 17 is detachable from the plate 18, and power driven in such a way as will allow previously formed stacks 19 of labels 5 to be fed into the hopper 6 automatically along the direction of the relative axis 8 at a transfer station T coinciding with the inlet 15.

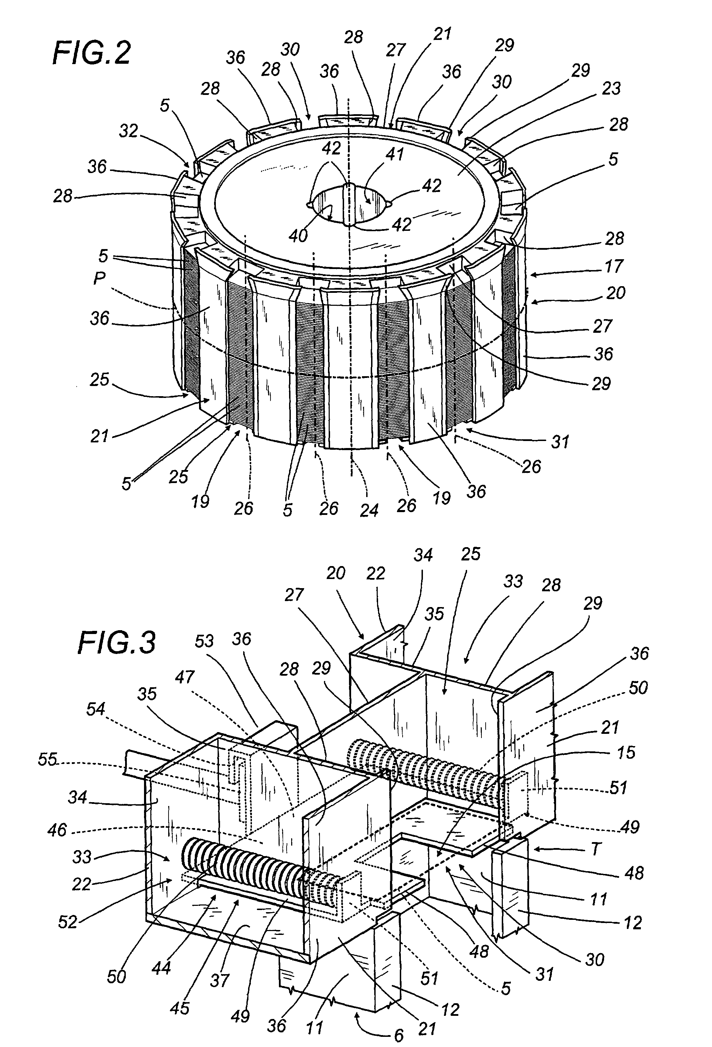

As discernible to advantage in figs 2, 4, 5 and 6, the magazine 17 comprises a drum-like frame 20 of hollow embodiment, constructed from a material of low specific weight. The frame 20 appears thus as a bell housing delimited externally and internally by respective substantially cylindrical walls 21 and 22, and by a lid 23 uppermost.

The external wall 21 extends around an axis 24 substantially of symmetry on which the frame 20 is centred, and presents a plurality of longitudinal compartments 25 with respective central axes 26 disposed parallel to the axis 24 of the frame and equispaced along a looped circular path P centred on the selfsame axis 24.

Each compartment 25 serves to hold a respective previously formed stack 19 of labels 5 aligned on the corresponding axis 26, and exhibits a structure similar in all respects to that of the hopper 6. More particularly, each compartment 25 presents a flat back wall 27 disposed parallel to the axis 26, two flat side walls 28 extending at right angles to the back wall 27 and parallel to the axis 26, also two flat front walls 29 extending at right angles from the respective side walls 28 one toward the other, parallel to the back wall 27, and compassing a longitudinal opening 30 through which the inside of the compartment 25 is accessible.

In like manner to the hopper 6, the walls 27, 28 and 29 of each compartment 25 combine to create an outlet 31 at the bottom end and an inlet 32 at the top end, by way of which the labels 5 are admitted and released respectively.

The internal wall 22 extends likewise symmetrically about the axis 24 of the frame 20 and combines with the external wall 21 to establish a plurality of longitudinal parallelepiped cavities 33 presenting a substantially trapezoidal section, each located between two successive compartments 25. The single cavity 33 presents a back wall 34, two flat side walls 35 coinciding in part with the side walls 28 of the adjacent compartments 25, and a flat front wall 36 interconnecting the front walls 29 of the adjacent compartments, all of which are disposed parallel to the axis 24. Also forming part of each cavity 33 is a bottom wall 37 disposed orthogonally to the axis 24.

The magazine 17 is supported by the plate 18 with the bottom walls 37 of the cavities 33 resting on the plate 18 and the centre axis 24 parallel to the axis 8 of the hopper 6, and is power driven by the shaft 38 (fig 1) of a stepping actuator 39 such as will cause the frame 20 to rotate intermittently about the axis 24 in the direction of the arrow F. To this end, the lid 23 of the frame 20 affords a central hole 40 by way of which the entire assembly is coupled coaxially to the shaft 38.

The hole 40 is delimited by a peripheral surface 41 presenting a plurality of grooves 42 designed to couple with respective longitudinal ribs 43 on the shaft 38 in such a manner as will determine a given angular position of the frame 20, relative to the shaft 38, in which the compartment 25 occupying the transfer station T is disposed with its axis 26 aligned on the axis 8 of the hopper 6. In this same position of alignment, the walls 27, 28 and 29 of the compartment 25 are substantially aligned with the respective walls 10, 11 and 12 of the hopper 6, and the outlet 31 of the compartment 25 is adjacent to and centred above the inlet 15 of the hopper 6. In short, the grooves 42 and the ribs 43 constitute reference means by which the magazine 17 can be made to assume a predetermined position relative to the plate 18.

The shaft 38 is indexable through a step equal to the angular distance at which the compartments 25 are spaced apart around the axis 24 in such a way that, during operation, the single compartments 25 will come to rest one after another in alignment with the transfer station T.

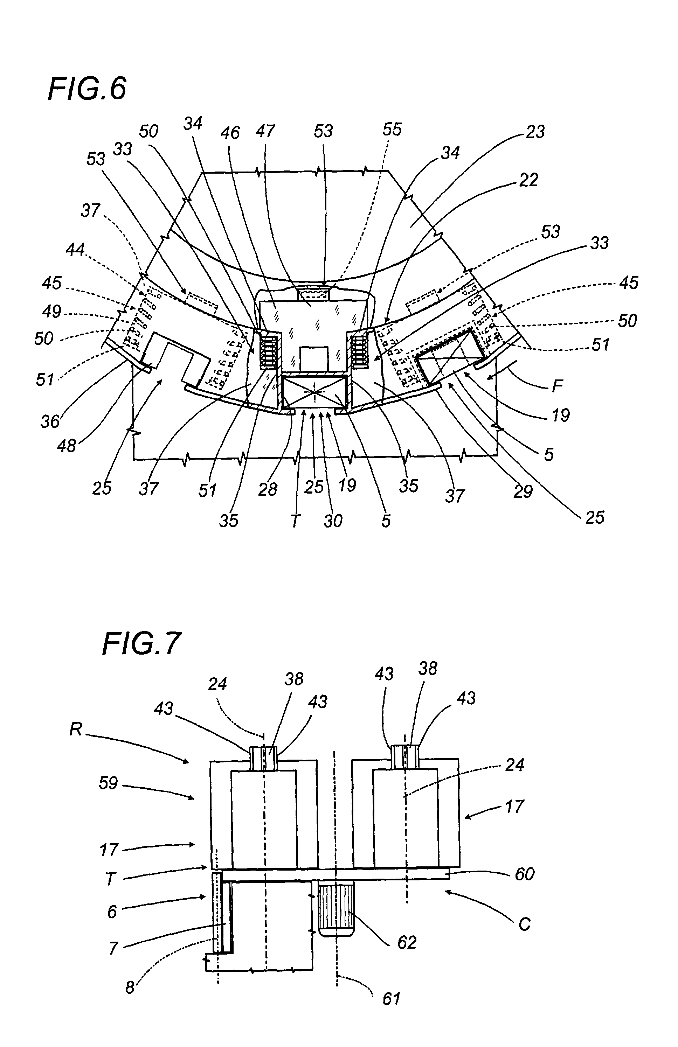

The outlet 31 of each compartment 25 is equipped with a relative shutter device 44 that comprises a retractable barrier element 45 capable of movement between a retracted position in which the outlet 31 is open (fig 6), and an extended position in which the outlet 31 remains closed (figs 3, 4 and 5). The "retracted" and "extended" positions are understood as coinciding with a given radial generator of the frame 20 and related to the axis 24.

Each barrier element 45 consists in a flat plate 46 disposed orthogonally to the walls 27, 28 and 29 of the compartment 25. The plate 46 includes a central portion 47 defining a retractable bottom wall 48 of the compartment 25, and two lateral appendages 49 supported slidably from beneath by the respective bottom walls 37 of the adjoining cavities 33.

The shutter device 44 further comprises springs 50 located one above each lateral appendage 49. Each spring 50 is interposed between the back wall 34 of the cavity 33 and a lug 51 extending upward from the respective appendage 49 at right angles.

The springs 50, the appendages 49, the lugs 51 and the back walls 34 of the cavities 33 combine to establish a tension device 52 such as will hold the respective barrier element 45 elastically in the aforementioned extended closed position, whilst the back walls 34, side walls 35 and bottom walls 37 of the cavities 33 and the appendages 49, on the one hand, and the side walls 35 of the cavities 33 and the lugs 51 on the other, operate in conjunction with one another to allow the plate 46 a single radial movement between the retracted open position and the extended closed position.

The central portion 47 of each plate 46 is attached on the side remote from the lugs 51 to a block 53 affording a channel 54 disposed tangentially to the frame 20. In operation, each block 53 in succession couples by way of the relative channel 54 with a slide 55 supported by the plate 18 and occupying the transfer station T.

The slide 55 is operated, moving radially between a retracted position and an extended position, by an actuator 56 which together with the aforementioned stepping actuator 39 is connected to a respective output of a controller 57 (fig 1).

The controller 57 is also connected on the input side to a barrier photocell 58 of which the beam line L is set at an appropriate height between the two side walls 11 of the hopper 6.

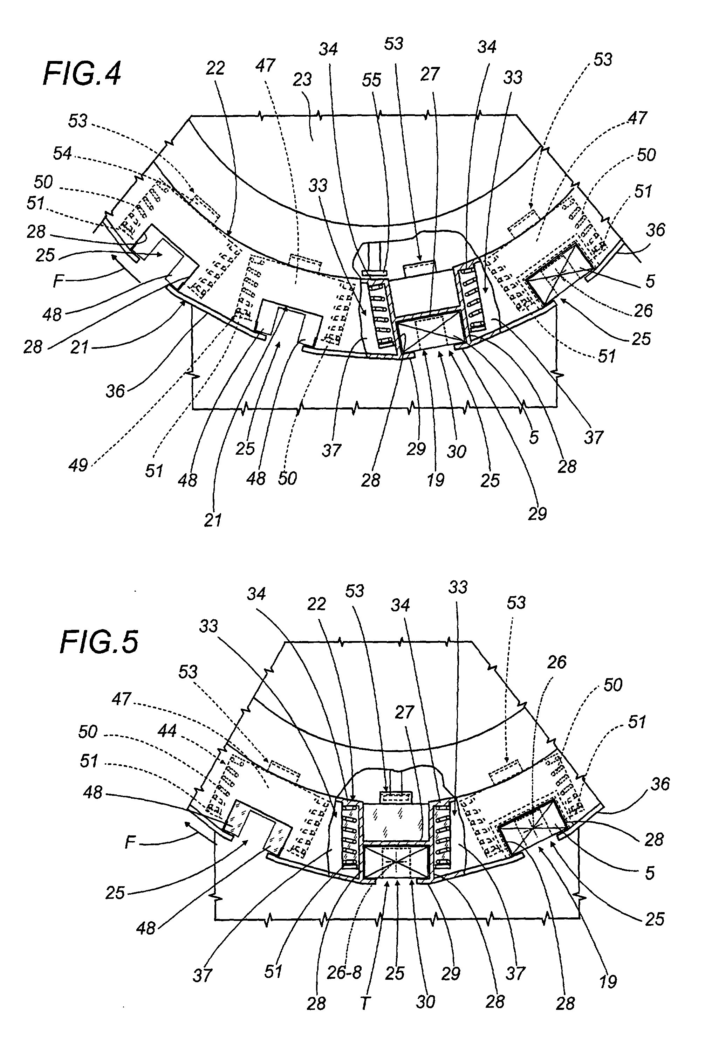

The operation of the unit 4 will now be described starting from a situation in which the magazine 17 has been indexed through one angular step (fig 4) and a compartment 25 brought thus into the transfer station T with its axis 26 aligned on the axis 8 of the hopper 6 (fig 5). During this same step, the slide 55 will be occupying the extended position and the plate 46 of the compartment 25 maintained in the relative extended closed position through the agency of the tension device 52.

On entering the transfer station T, the channel 54 afforded by the block 53 fixed to the plate 46 is engaged by the slide 55, whereupon the actuator 56 will be piloted by the controller 57 to draw the slide 55 into the retracted position (fig 6).

Following the retraction of the plate 46 brought about by the movement of the slide 55 against the action of the springs 50, the stack 19 of labels 5 contained in the compartment 25 can drop freely and unite with the depleting stack 9 of labels 5 in the hopper 6 to form a single stack.

Importantly, the movement of the plate 46 from the extended closed position toward the retracted open position will occur in a relatively short space of time, in order to avoid a disorderly descent of the labels 5 into the hopper 6.

As the labels 5 are taken up singly by the pickup head 16 from the outlet 14 of the hopper 6, the height of the stack in the hopper 6 falls gradually and dips below the beam line L of the photocell 58. Recognizing the condition, the controller 57 causes the slide 55 to return to the normally extended position and indexes the magazine 17.

The operating steps of the unit 4 described thus far will now be repeated cyclically until the full supply of labels 5 in the magazine 17 has been depleted.

Once empty, the magazine 17 can be lifted manually by an operator and separated from the shaft 38 and the slide 55, then replaced with a full magazine 17 loaded previously in a location remote from the packer 2.

It will be observed that the operation of replacing the magazine 17 can be accomplished quickly, given the lightweight structure of the hollow frame 20 and the simple type of coupling with the shaft 38. The operation is performed during the interval of time between the moment immediately following the return of the slide 55 to the extended position and the moment when the stack in the hopper 6 is fully depleted, the operator having first inhibited the stepping actuator 39. Once the new magazine 17 is in place, the sequence resumes with the retraction of the slide 55, and therefore of the plate 46. The schematic diagram of fig 7 shows an alternative embodiment of the feed unit 4 described thus far, denoted 59 in its entirety.

In this feed unit 59, the plate 18 is replaced by a turntable or carousel 60 rotatable about an axis 61 parallel to the axis 8 of the hopper 6 and designed to carry two removable auxiliary magazines 17 of the type described above with axes 24 occupying positions diametrically opposed in relation to the main axis 61.

The carousel 60 is rotated through steps of 180° about the axis 61, driven by an actuator 62 that can be controlled by an operator in such a way as to position the two magazines 17 alternately in alignment with an operating station R at which the hopper 6 is filled, and a non operating station C at which empty and full magazines are changed over.

The magazine 17 that occupies the filling station R is positioned relative to the hopper 6 and operated in the same way as the unit 4 described previously, whilst the magazine 17 occupying the changeover station C can be replaced manually by an operator at leisure as the magazine at the filling station R is emptied.

The operation of the unit 59 is readily discernible from the foregoing description and therefore needs no further explanation. It may usefully be noted, nonetheless, that the carousel 60 described above might also carry more than two removable auxiliary magazines positioned symmetrically in relation to the main axis 61.

It will be appreciated that, whilst the various examples described are illustrated with just one hopper, the present invention will nonetheless embrace any given solution whereby the auxiliary magazine is used to supply two or more hoppers, perhaps holding respective stacks 19 of dissimilar labels.

## Claims

1. A unit for feeding labels to a user machine, comprising at least one stationary main magazine or hopper (6) containing a stack (9) of labels (5), from which the labels (5) are taken up singly and transferred to the work stations of the user machine (2); a first auxiliary magazine (17; 17; 64) furnished with a plurality of compartments (25) each serving to contain a respective stack (19) of labels (5); and first drive means (38; 38; 73) by which the first auxiliary magazine (17; 17; 64) can be set in motion in such a way as to position each compartment (25) in succession at a station (T) where the labels (5) are transferred from the single compartment (25) to the main magazine (6), support means (18; 60; 72) to which the first auxiliary magazine (17; 17; 64) is mounted in removable fashion,
**characterized in that** the unit comprises a second auxiliary magazine (17) mounted removably to the support means (60) and second drive means (62) operated in such a way as to position each auxiliary magazine (17) in succession at a station (R) where the main magazine (6) is filled.

2. A unit as in claim 1, **characterized in that** each compartment (25) of every auxiliary magazine (17; 17; 64) is fashioned with an openable outlet end (31) by way of which the respective labels (5) can be transferred to the main magazine (6), and equipped with a relative shutter device (44) by which the outlet end (31) can be opened and closed.

3. A unit as in claim 2, **characterized in that** the shutter device (44) comprises a barrier element (45) capable of movement between positions in which the outlet end (31) is opened and closed, respectively.

4. A unit as in claim 3, **characterized in that** the shutter device (44) comprises tension means (52) by which the barrier element (45) is maintained normally in the closed position.

5. A unit as in claim 4, **characterized in that** tension means (52) comprise elastic means (50).

6. A unit as in claim 5, **characterized in that** elastic means (50) comprise at least one spring (50).

7. A unit as in claims 2 to 6, **characterized in that** the unit also comprises actuator means (55) positioned at the transfer station (T) for interacting with the shutter devices (44) in such a way as to open and/or close the respective outlet ends (31).

8. A unit as in claims 1 to 7, **characterized in that** each the auxiliary magazine (17) comprises a frame (20) on which the compartments (25) are distributed uniformly around a looped path (P).

9. A unit as in claim 8, **characterized in that** the looped path (P) is a circular path.

10. A unit as in claim 9, **characterized in that** the frame (20) is rotatable about a first axis (24) through the agency of the first drive means (38), and the compartments (25) are aligned on relative stacking axes (26) disposed parallel to the first axis (24) and distributed uniformly about the selfsame first axis (24).

11. A unit as in claim 10, **characterized in that** the frame (20) appears as a hollow drum delimited externally by a substantially cylindrical periphery (21) around which the compartments (25) are distributed uniformly.

12. A unit as in claim 1, **characterized in that** support means (60) consist in a carousel (60) rotatable about a second axis (61) and proportioned to carry at least two auxiliary magazines (17) mounted removably and distributed uniformly about the second axis (61).

13. A unit as in claims 1 to 7, **characterized in that** auxiliary magazine (64) comprises a frame (65) on which the compartments (25) are distributed uniformly along a rectilinear path (P')

14. A unit as in claims 1 to 13, **characterized in that** the unit comprises reference means (42, 43; 42, 43; 78, 79) by which each auxiliary magazine (17; 17; 64) is made to assume a predetermined position relative to the support means (18; 60; 72)

## Patentansprüche

1. Vorrichtung zum Zuführen von Etiketten an eine Etikettiermaschine, enthaltend wenigstens ein stationäres Hauptmagazin oder Trichter (6) zur Aufnahme eines Stapels (9) von Etiketten (5), aus welchem die Etiketten (5) einzeln entnommen und den Arbeitsstationen der Verarbeitungsmaschine (2) zugeführt werden; ein erstes Hilfsmagazin (17; 17; 64), ausgestattet mit einer Anzahl von Fächern (25), von denen jedes dazu dient, einen jeweiligen Stapel (19) von Etiketten (5) aufzunehmen; sowie erste Antriebsmittel (38; 38; 73), durch welche das erste Hilfsmagazin (17; 17; 64) auf solche Weise in Bewegung gesetzt werden kann, dass es aufeinanderfolgend jedes Fach (25) an einer Station (T) positioniert, in welcher die Etiketten (5) aus dem einzelnen Fach (25) in das Hauptmagazin (6) übertragen werden können; und Trägermittel (18; 60; 72), an welchen das erste Hilfsmagazin (17; 17; 64) auf abnehmbare Weise montiert ist, **dadurch gekennzeichnet, dass** die Vorrichtung ein zweites Hilfsmagazin (17) enthält, das abnehmbar an Trägermitteln (60) montiert ist, sowie zweite Antriebsmittel (62), die auf solche Weise betätigt werden, dass sie aufeinanderfolgend jedes Hilfsmagazin (17) an einer Station (R) positionieren, in welcher das Hauptmagazin (6) gefüllt wird.

2. Vorrichtung nach Patentanspruch 1, **dadurch gekennzeichnet, dass** jedes Fach (25) eines jeden Hilfsmagazins (17; 17; 64) mit einem zu öffnenden Austrittsende (31) versehen ist, durch welches die entsprechenden Etiketten (5) in das Hauptmagazin (6) übertragen werden können, ausgestattet mit einer entsprechenden Sperrvorrichtung (44), durch welche das Austrittsende (31) geöffnet und geschlossen werden kann.

3. Vorrichtung nach Patentanspruch 2, **dadurch gekennzeichnet, dass** die Sperrvorrichtung (44) ein Absperrelement (45) enthält, in der Lage, Bewegungen zwischen Positionen auszuführen, in welchen das Austrittsende (31) jeweils geöffnet und geschlossen ist.

4. Vorrichtung nach Patentanspruch 3, **dadurch gekennzeichnet, dass** die Sperrvorrichtung (44) Spannmittel (52) enthält, durch welche das Absperrelement (45) normalerweise in geschlossener Position gehalten wird.

5. Vorrichtung nach Patentanspruch 4, **dadurch gekennzeichnet, dass** die Spannmittel (52) elastische Mittel (50) enthalten.

6. Vorrichtung nach Patentanspruch 5, **dadurch gekennzeichnet, dass** die elastischen Mittel (50) wenigstens eine Feder (50) enthalten.

7. Vorrichtung nach den Patentansprüchen von 2 bis 6, **dadurch gekennzeichnet, dass** die Vorrichtung ebenfalls Antriebsmittel (55) enthält, positioniert an der Transferstation (T) zum Zusammenwirken mit den Sperrvorrichtungen (44) auf solche Weise, dass sie die jeweiligen Austrittsenden (31) öffnen und/oder schliessen.

8. Vorrichtung nach den Patentansprüchen von 1 bis 7, **dadurch gekennzeichnet, dass** jedes Hilfsmagazin (17) einen Rahmen (20) enthält, an welchem die Fächer (25) gleichmässig um eine ringförmig geschlossene Bahn (P) verteilt sind.

9. Vorrichtung nach Patentanspruch 8, **dadurch gekennzeichnet, dass** die ringförmig geschlossene Bahn (P) eine kreisförmige Bahn ist.

10. Vorrichtung nach Patentanspruch 9, **dadurch gekennzeichnet, dass** der Rahmen (20) durch die Wirkung der ersten Antriebsmittel (38) um eine erste Achse (24) drehbar ist und die Fächer (25) nach entsprechenden Stapelachsen (26) ausgerichtet sind, angeordnet parallel zu der ersten Achse (24) und gleichmässig um dieselbe erste Achse (24) herum verteilt.

11. Vorrichtung nach Patentanspruch 10, **dadurch gekennzeichnet, dass** der Rahmen (20) als eine hohle Trommel ausgebildet ist, aussen begrenzt durch einen im wesentlichen zylindrischen Umfang (21), um welchen die Fächer (25) gleichmässig verteilt sind.

12. Vorrichtung nach Patentanspruch 1, **dadurch gekennzeichnet, dass** die Trägermittel (60) aus einem Karussell (60) bestehen, das um eine zweite Achse (61) drehbar und so ausgelegt ist, dass es wenigstens zwei Hilfsmagazine (17) trägt, die abnehmbar montiert und gleichmässig um die zweite Achse (61) verteilt sind.

13. Vorrichtung nach den Patentansprüchen von 1 bis 7, **dadurch gekennzeichnet, dass** das Hilfsmagazin (64) einen Rahmen (65) enthält, an welchem die Fächer (25) gleichmässig entlang einer geradlinigen Bahn (P') verteilt sind.

14. Vorrichtung nach den Patentansprüchen von 1 bis 13, **dadurch gekennzeichnet, dass** die Vorrichtung Mittel (42, 43; 42, 43; 78, 79) enthält, welche bewirken, dass jedes Hilfsmagazin (17; 17; 64) im Verhältnis zu den Trägermitteln (18; 60; 72) eine bestimmte Position einnimmt.

## Revendications

1. Un dispositif d'approvisionnement d'une étiqueteuse en étiquettes comprenant au moins un magasin principal fixe ou trémie (6) contenant une pile (9) d'étiquettes (5) à partir duquel les étiquettes (5) sont prélevées une par une et transférées vers les stations de travail de l'étiqueteuse (2) ; un premier magasin auxiliaire (17; 17; 64) pourvu d'une pluralité de compartiments (25) servant chacun à contenir une pile respective (19) d'étiquettes (5) ; des premiers moyens d'entraînement (38; 38; 73) destinés à déplacer le premier magasin auxiliaire (17; 17; 64) de manière à positionner en succession chaque compartiment (25) au niveau d'une station (T) où les étiquettes (5) sont transférées du compartiment (25) au magasin principal (6) ; et des moyens de support (18; 60; 72) auxquels est associé de manière amovible le premier magasin auxiliaire (17; 17; 64), ledit dispositif étant **caractérisé en ce qu'**il comprend un deuxième magasin auxiliaire (17) associé de manière amovible aux moyens de support (60) et des deuxièmes moyens d'entraînement (62) actionnés de manière à positionner en succession chaque magasin auxiliaire (17) au niveau d'une station (R) où le magasin principal (6) est réapprovisionné.

2. Le dispositif selon la revendication 1, **caractérisé en ce que** chaque compartiment (25) de chaque magasin auxiliaire (17; 17; 64) est réalisé avec une extrémité de sortie (31) pouvant être ouverte pour permettre le transfert des étiquettes (5) respectives au magasin principal (6), et est équipé d'un dispositif obturateur (44) correspondant destiné à ouvrir et fermer l'extrémité de sortie (31) en question.

3. Le dispositif selon la revendication 2, **caractérisé en ce que** ledit dispositif obturateur (44) comprend un élément de barrage (45) pouvant se déplacer entre des positions dans lesquelles l'extrémité de sortie (31) susmentionnée est respectivement ouverte et fermée.

4. Le dispositif selon la revendication 3, **caractérisé en ce que** ledit dispositif obturateur (44) comprend des moyens de tension (52) destinés à maintenir normalement ledit élément de barrage (45) dans la position fermée.

5. Le dispositif selon la revendication 4, **caractérisé en ce que** lesdits moyens de tension (52) comprennent des moyens élastiques (50).

6. Le dispositif selon la revendication 5, **caractérisé en ce que** lesdits moyens élastiques (50) comprennent au moins un ressort (50).

7. Le dispositif selon les revendications de 2 à 6, **caractérisé en ce qu'**il comprend aussi des moyens actionneurs (55) placés au niveau de la station de transfert (T) et destinés à interagir avec les dispositifs obturateurs (44) pour ouvrir et/ou fermer les extrémités de sortie (31) respectives.

8. Le dispositif selon les revendications de 1 à 7, caractérisé en ce que-chaque magasin auxiliaire (17) comprend un châssis (20) sur lequel les compartiments (25) susmentionnés sont distribués de manière uniforme suivant un parcours (P) en boucle.

9. Le dispositif selon la revendication 8, **caractérisé en ce que** ledit parcours (P) en boucle est un parcours circulaire.

10. Le dispositif selon la revendication 9, **caractérisé en ce que** ledit châssis (20) peut tourner autour d'un premier axe (24) par l'intermédiaire des premiers moyens d'entraînement (38), et **en ce que** lesdits compartiments (25) sont alignés sur des axes d'empilement (26) correspondants parallèles au premier axe (24) et distribués de manière uniforme autour de ce même premier axe (24).

11. Le dispositif selon la revendication 10, **caractérisé en ce que** ledit châssis (20) présente la structure d'un tambour creux délimité extérieurement par une périphérie (21) essentiellement cylindrique autour de laquelle les compartiments (25) sont distribués de manière uniforme.

12. Le dispositif selon la revendication 1, **caractérisé en ce que** lesdits moyens de support (60) consistent en un carrousel (60) pouvant tourner autour d'un deuxième axe (61) et proportionné pour supporter au moins deux magasins auxiliaires (17) montés de manière amovible et distribués de manière uniforme autour du deuxième axe (61) en question.

13. Le dispositif selon les revendications de 1 à 7, **caractérisé en ce que** ledit magasin auxiliaire (64) comprend un châssis (65) sur lequel les compartiments (25) susmentionnés sont distribués de manière uniforme le long d'un parcours (P') rectiligne.

14. Le dispositif selon les revendications de 1 à 13, **caractérisé en ce qu'**il comprend des moyens de référence (42, 43; 42, 43; 78, 79) destinés à amener chaque magasin auxiliaire (17; 17; 64) dans une position prédéterminée par rapport aux moyens de support (18; 60; 72) susmentionnés.
